# EUROPEAN PATENT SPECIFICATION

(11) **EP 1 864 796 B1**
(45) Date of publication and mention of the grant of the patent: **11.08.2010**
(21) Application number: 06731223.1
(22) Date of filing: 30.03.2006
(51) Int. Cl.: B32B 27/34, B32B 1/08, F16L 11/04, C08L 77/10

(54) **MULTILAYER STRUCTURE**
MEHRLAGIGE STRUKTUR
STRUCTURE MULTICOUCHE

(30) Priority: 31.03.2005 JP 2005103298
(43) Date of publication of application: 12.12.2007
(73) Proprietor: KURARAY CO., LTD., Kurashiki-shi, Okayama 710-8622 (JP)
(72) Inventor: UCHIDA, Koichi, Kanagawa 223-0052 (JP); YAMASHITA, Takashi, Ibaraki 3050841 (JP)
(74) Representative: Müller-Boré & Partner Patentanwälte
(86) International application number: PCT/JP2006/307275
(87) International publication number: WO 2006/107096

(56) References cited:
- JP-A- 05 229 041
- JP-A- 2000 310 365
- JP-A- 2004 203 012
- JP-A- 2004 346 982
- JP-A- 2004 358 696
- US-A1- 2004 126 523
- US-A1- 2005 038 159
- US-A1- 2005 038 191
- US-B1- 6 267 148
- DATABASE WPI Week 200337 Thomson Scientific, London, GB; AN 2003-384472 XP002531652 & JP 2002 254581 A (UBE IND LTD) 11 September 2002 (2002-09-11) & JP 2002 254581 A (UBE IND LTD) 11 September 2002 (2002-09-11)

## Description

The present invention relates to a multilayer structure having at least two layers, wherein each of the two layers is made of a polyamide resin composition comprising a polyamide resin having a particular structural unit, and specifically, the invention relates to a multilayer structure superior in the alcohol gasoline permeation-preventing property, interlayer adhesiveness, low temperature impact resistance, heat resistance and chemical resistance.

### Background Art

In automobile-related fuel tubes, hoses, tanks and the like, substitution of the main materials from metal to resin is ongoing so as to deal with the problems of rust due to the use of antifreezing agents for the road, lightening of constituting parts of automobiles in line with the saving of energy in recent years and the like. Examples of such resin include saturated polyester-based resin, polyolefin-based resin, polyamide-based resin, thermoplastic polyurethane-based resin and the like. As to single layer molded products using these resins, however, since they are insufficient in the heat resistance, chemical resistance and the like, their applicable range is limited.

Furthermore, in recent years, from the aspect of prevention of environmental pollution, strict exhaust gas regulations including prevention of leakage of volatile hydrocarbon and the like into the air due to the diffusion thereof through the walls of fuel tube, hose or tank are in force. In the future, stricter regulations being imposed, it is desired to maximally suppress transpiration of the fuel due to its permeation from the walls of fuel tube, hose or tank. From the aspect of consumption saving and high performance of gasoline, moreover, oxygen-containing gasoline obtained by blending alcohols having a low boiling point such as methanol, ethanol and the like, or ethers such as methyl-t-butyl ether (MTBE) and the like, has been increasingly used. Therefore, prevention of permeation of the fuel described above is not sufficient for conventionally-used polyamide 11 (PA11) resin, polyamide 12 (PA12) resin and the like, and an improvement in the alcohol gasoline permeation-preventing property is particularly desired.

For this end, the thickness of the walls of fuel tube, hose and tank needs to be increased to improve the alcohol gasoline permeation-preventing property. This in turn gives rise to the problems in that the flexibility of molded products decreases and the weight thereof increases, and further that the cost increases due to the materials and productivity.

As a method of solving the problems, a multilayer structure containing polyamide 11 or polyamide 12 as an outer layer or the outermost layer and a resin having good alcohol gasoline permeation-preventing property, for example, a resin superior in the fuel barrier property such as ethylene/vinyl acetate copolymer saponified product (EVOH), poly(methaxylylene adipamide) (polyamide MXD6), poly(butylene terephthalate) (PBT), poly(ethylene naphthalate) (PEN), poly(butylene naphthalate) (PBN), poly(vinylidene fluoride) (PVDF), ethylene/tetrafluoroethylene copolymer (ETFE), ethylene/chlorotrifluoroethylene copolymer (ECTFE), tetrafluoroethylene/hexafluoropropylene copolymer (TFE/HFP, FEP) and tetrafluoroethylene/hexafluoropropylene/vinylidene fluoride copolymer (TFE/HFP/VDF, THV) as an innermost layer has been proposed (see for example, National Publication of Translated Version No. JP7-507739 etc.).

However, it is an alcohol gasoline permeation-preventive layer of a multilayer structure with polyamide 11 or polyamide 12, and as long as polyamide 11 or polyamide 12 is used, even a use of a resin with good alcohol gasoline permeation-preventing property has a limitation on the improvement of the fuel barrier property.

In addition, hoses for hydrogen fuels, which comprise an inner resin layer, a metal thin film layer and an outer resin layer are known. It is also known that nonanemethylenediamine-terephthalate copolymers can be used as a resin constituting a low gas permeation layer constituting the inner resin layer and a low water permeability layer optionally set inside the gas permeation layer, and a resin constituting the outer resin layer, and that the hoses for hydrogen fuels can be utilized for an automobile fuel (gasoline-dimethyl ether) transport hose and the like (see JP-A-2002-168377). However, no description relating to the addition and the like of an impact resistance modifier as for polyamide 9T (PA9T) is found, and there was a possibility that the use of PA9T without containing an impact resistance modifier may afford a hose that fails to sufficiently satisfy the impact resistance.

JP-A-2002-254581 describes a bi-axially oriented polyamide laminate film comprising a layer (a) containing an aromatic polyamide (A) and a soft polymer (P), and at least one layer of a layer (b) containing an aliphatic polyamide resin mixture (B) and polymer (P), and a layer (c) containing polymer (P) and a mixture of polyamide (A) and polymer (B). US 2005/0038191 A1 and US 2005/0038159 A1 describe compositions comprising impact modifiers and a compatibilized blend of a poly(arylene ether) and an aliphatic-aromatic polyamide.

Furthermore, while JP-A-2004-203012 proposes a multilayer structure comprising a layer made of PA11 or PA12 and a layer made of a polyamide resin comprising 1,9-nonanediamine, 2-methyl-1,8-octanediamine and terephthalic acid, such multilayer structure is sometimes not sufficiently satisfactory because the requested levels of alcohol gasoline permeation-preventing property and interlayer adhesiveness have become very high.

It is therefore an object of the present invention to provide a multilayer structure capable of solving the aforementioned problems, which shows excellent alcohol gasoline permeation-preventing property and is superior in the interlayer adhesiveness, low temperature impact resistance and heat resistance.

### Disclosure of the Invention

The present inventors have conducted intensive studies in an attempt to solve the above-mentioned problems and found that a multilayer structure having at least two layers, wherein each of the two layers consists of a polyamide resin composition comprising the below-mentioned polyamide resin having a particular structural unit, wherein the polyamide resin compositions constituting the two layers each comprise an impact resistance modifier at a content having a particular difference from the other content, expresses a superior alcohol gasoline permeation-preventing property as well as satisfies various properties such as interlayer adhesiveness, low temperature impact resistance, heat resistance and the like.

Accordingly, the present invention provides the following.
(1) A multilayer structure comprising at least two layers of layer A consisting of a polyamide resin composition (a) comprising 30 - 90 mass% of a polyamide resin (X) comprising a dicarboxylic acid unit comprising 50 - 100 mol% of a terephthalic acid unit and/or a naphthalene dicarboxylic acid unit, and a diamine unit comprising 60 - 100 mol% of an aliphatic diamine unit having 9 - 13 carbon atoms, and 70 - 10 mass% of an impact resistance modifier, and layer B consisting of a polyamide resin composition (b) comprising 50 - 95 mass% of a polyamide resin (X') comprising a dicarboxylic acid unit comprising 50 - 100 mol% of a terephthalic acid unit and/or a naphthalene dicarboxylic acid unit, and a diamine unit comprising 60 - 100 mol% of an aliphatic diamine unit having 9
   - 13 carbon atoms, and 50 - 5 mass% of an impact resistance modifier, which satisfies Y≧Y'+5 wherein Y shows a content ratio (mass%) of the impact resistance modifier in layer A and Y' shows a content ratio (mass%) of the impact resistance modifier in layer B.
(2) The multilayer structure of the above-mentioned (1), wherein the aliphatic diamine unit(s) having 9 - 13 carbon atoms constituting the polyamide resin (X) is(are) a 1,9-nonanediamine unit and/or a 2-methyl-1,8-octanediamine unit.
(3) The multilayer structure of the above-mentioned (1) or (2), wherein the aliphatic diamine unit(s) having 9 - 13 carbon atoms constituting the polyamide resin (X') is(are) a 1,9-nonanediamine unit and/or a 2-methyl-1,8-octanediamine unit.
(4) The multilayer structure of any one of the above-mentioned (1) - (3), wherein the proportion of the total thickness of layer A and layer B relative to the thickness of the multilayer structure exceeds 90%.
(5) The multilayer structure of any one of the above-mentioned (1) - (4), wherein the layer A is directly laminated on the layer B.
(6) The multilayer structure of any one of the above-mentioned (1) - (5), which is a fuel transport tube.

The multilayer structure of the present invention is superior in the alcohol gasoline permeation-preventing property, heat resistance, chemical resistance, low temperature impact resistance and interlayer adhesiveness. Accordingly, the multilayer structure of the present invention is effective in the form of, for example, film, tube (hose), bottle, tank and the like for automobile parts, technical material, industrial material, electric or electronic parts, mechanical parts, office equipment parts, household goods, various containers and the like, and useful, particularly, as a fuel transport tube such as an automobile fuel piping tube and the like.

### Best Mode for Embodying the Invention

The present invention is explained in detail in the following.

The polyamide resins (X) and (X') to be used in the present invention each comprise a dicarboxylic acid unit comprising 50 - 100 mol% of a terephthalic acid unit and/or a naphthalene dicarboxylic acid unit, and a diamine unit comprising 60 - 100 mol% of an aliphatic diamine unit having 9 - 13 carbon atoms. The polyamide resins (X) and (X') may be the same or different.

The content of the terephthalic acid unit and/or naphthalene dicarboxylic acid unit in polyamide resins (X) and (X') is 50 mol% - 100 mol%, preferably 60 mol% - 100 mol%, more preferably 75 mol% - 100 mol%, and further preferably 90 mol% - 100 mol%, relative to the total dicarboxylic acid unit of each polyamide resin. When the content of the terephthalic acid unit and/or naphthalene dicarboxylic acid unit is less than 50 mol%, various properties such as heat resistance, chemical resistance, alcohol gasoline permeation-preventing property and the like of the obtained multilayer structure are degraded.

Examples of the naphthalene dicarboxylic acid unit include a unit derived from 2,6-naphthalenedicarboxylic acid, 2,7-naphthalenedicarboxylic acid or 1,4-naphthalenedicarboxylic acid. Of the above-mentioned naphthalene dicarboxylic acid units, a unit derived from 2,6-naphthalenedicarboxylic acid is preferable.

A dicarboxylic acid unit in polyamide resins (X) and (X') may contain a dicarboxylic acid unit other than the terephthalic acid unit and/or naphthalene dicarboxylic acid unit, as long as the object of the multilayer structure of the present invention can be achieved. Examples of such other dicarboxylic acid unit include units derived from aliphatic dicarboxylic acid such as malonic acid, dimethylmalonic acid, succinic acid, glutaric acid, adipic acid, 2-methyladipic acid, trimethyladipic acid, pimelic acid, 2,2-dimethylglutaric acid, 2,2-diethylsuccinic acid, azelaic acid, sebacic acid, suberic acid and the like; alicyclic dicarboxylic acid such as 1,3-cyclopentanedicarboxylic acid, 1,3/1,4-cyclohexanedicarboxylic acid and the like; and aromatic dicarboxylic acid such as isophthalic acid, 1,3/1,4-phenylenedioxydiacetic acid, diphenic acid, 4,4'-oxydibenzoic acid, diphenylmethane-4,4'-dicarboxylic acid, diphenylsulfone-4,4'-dicarboxylic acid, 4,4'-biphenyldicarboxylic acid and the like. One or more kinds of these can be used. Of the above-mentioned units, a unit derived from aromatic dicarboxylic acid is preferable. The content of such other dicarboxylic acid unit is 50 mol% - 0 mol%, preferably 40 mol% - 0 mol%, more preferably 25 mol% - 0 mol%, and further preferably 10 mol% - 0 mol%, relative to the total dicarboxylic acid unit of each polyamide resin. Furthermore, a unit derived from polyvalent carboxylic acid such as trimellitic acid, trimesic acid, pyromellitic acid and the like can also be contained within the range permitting melt molding.

The content of the aliphatic diamine unit having 9 - 13 carbon atoms in polyamide resins (X) and (X') is 60 mol% - 100 mol%, preferably 75 mol% - 100 mol%, and more preferably 90 mol% - 100 mol%, relative to the total diamine unit of each polyamide resin. When the content of the aliphatic diamine unit having 9 - 13 carbon atoms is less than 60 mol%, heat resistance and impact resistance of the obtained multilayer structure are degraded and the low water-absorbing property is impaired.

The aliphatic diamine unit having 9 - 13 carbon atoms may be either of linear aliphatic diamine unit and branched aliphatic diamine unit, and examples of the linear aliphatic diamine unit include units derived from 1,9-nonanediamine, 1,10-decanediamine, 1,11-undecanediamine, 1,12-dodecanediamine and 1,13-tridecanediamine. Examples of the branched aliphatic diamine unit include units derived from branched aliphatic diamine such as 2-methyl-1,8-octanediamine, 5-methyl-1,9-nonanediamine and the like.

Of the above-mentioned aliphatic diamine units having 9 - 13 carbon atoms, a unit derived from 1,9-nonanediamine or 2-methyl-1,8-octanediamine is preferable from the aspect of alcohol gasoline permeation-preventing property and economic aspect and a unit derived from 1,12-dodecanediamine is preferable from the aspect of low temperature impact resistance. Furthermore, the co-presence of 1,9-nonanediamine and 2-methyl-l,8-octanediamine units is preferable, where the molar ratio of them (the former to the latter) is preferably within the range of 30:70 - 98:2, and more preferably within the range of 40:60 - 95:5, for the balance between moldability, impact resistance and coextrusion moldability.

The diamine unit in polyamide resins (X) and (X') may contain a unit derived from a diamine other than the unit comprising aliphatic diamine having 9 - 13 carbon atoms as long as the object of the multilayer structure of the present invention can be achieved. Examples of other diamine unit include units derived from aliphatic diamine such as ethylenediamine, propylenediamine, 1,4-butanediamine, 1,5-pentanediamine, 1,6-hexanediamine, 1,7-heptanediamine, 1,8-octanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2/3-methyl-1,5-pentanediamine and the like; alicyclic diamine such as 1,3/1,4-cyclohexanediamine, 1,3/1,4-cyclohexanedimethylamine, bis(4-aminocyclohexyl)methane, bis(4-aminocyclohexyl)propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine, bis(aminopropyl)piperazine, bis(aminoethyl)piperazine, norbornanedimethylamine, tricyclodecanedimethylamine and the like; aromatic diamine such as p-phenylenediamine, m-phenylenediamine, p-xylylenediamine, m-xylylenediamine, 4,4'-diaminodiphenylmethane, 4,4'-diaminodiphenylsulfone, 4,4'-diaminodiphenylether and the like, and the like. One or more kinds of these can be used. The content of these diamine units is 40 mol% - 0 mol%, preferably 25 mol% - 0 mol%, and more preferably 10 mol% - 0 mol%, relative to the total diamine unit of each polyamide resin.

In addition, the terminal of the molecular chain of each of polyamide resins (X) and (X') is preferably blocked by a terminal-blocking agent, and more preferably not less than 40%, further preferably not less than 60%, particularly preferably not less than 70%, of the terminal group is blocked.

While the terminal-blocking agent is not particularly limited as long as it is a monofunctional compound reactive with the amino group or carboxyl group of the polyamide terminal, monocarboxylic acid or monoamine is preferable from the aspects of reactivity, stability of blocked terminal and the like, and monocarboxylic acid is more preferable from the aspects of easy handling and the like. Besides the above, acid anhydride, monoisocyanate, monoacid halide, monoesters, monoalcohols and the like can also be used.

The monocarboxylic acid to be used as a terminal-blocking agent is not particularly limited as long as it is reactive with the amino group and, for example, aliphatic monocarboxylic acid such as acetic acid, propionic acid, butyric acid, valeric acid, caproic acid, caprylic acid, lauric acid, tridecanoic acid, myristic acid, palmitic acid, stearic acid, pivalic acid, isobutanoic acid and the like; alicyclic monocarboxylic acid such as cyclohexanecarboxylic acid and the like; aromatic monocarboxylic acid such as benzoic acid, toluic acid, α-naphthalenecarboxylic acid, β-naphthalenecarboxylic acid, methylnaphthalenecarboxylic acid, phenylacetic acid and the like, and an optional mixture thereof can be mentioned. Of these, acetic acid, propionic acid, butyric acid, valeric acid, caproic acid, caprylic acid, lauric acid, tridecanoic acid, myristic acid, palmitic acid, stearic acid and benzoic acid are particularly preferable from the aspect of reactivity, stability of blocked terminal, price and the like.

The monoamine to be used as the terminal- blocking agent is not particularly limited as long as it is reactive with the carboxyl group and, for example, aliphatic monoamine such as methylamine, ethylamine, propylamine, butylamine, hexylamine, octylamine, decylamine, stearylamine, dimethylamine, diethylamine, dipropylamine, dibutylamine and the like; alicyclic monoamine such as cyclohexylamine, dicyclohexylamine and the like; aromatic monoamine such as aniline, toluidine, diphenylamine, naphthylamine and the like, and an optional mixture thereof can be mentioned. Of these, butylamine, hexylamine, octylamine, decylamine, stearylamine, cyclohexylamine and aniline are particularly preferable from the aspects of reactivity, boiling point, stability of blocked terminal, cost and the like.

The polyamide resins (X) and (X') in the present invention each preferably shows an intrinsic viscosity [η] as measured at 30°C in concentrated sulfuric acid of 0.4 - 3.0 dl/g, more preferably 0.5 - 2.5 dl/g, and further preferably 0.6 - 2.0 dl/g. When a polyamide resin having an intrinsic viscosity [η] within the above range is used, one more superior in the mechanical property, heat resistance and the like can be obtained. When the intrinsic viscosity is smaller than the aforementioned value, the mechanical property of the obtained multilayer structure sometimes becomes insufficient, and when it becomes larger than the aforementioned value, the extrusion pressure and torque become too high and the production of multilayer structure sometimes becomes difficult. The intrinsic viscosity [η] of polyamide resins (X) and (X') can be adjusted to the above-mentioned range by, for example, appropriately controlling the ratio of diamine and dicarboxylic acid, introduction amount of the terminal-blocking agent, polymerization conditions and the like.

Polyamide resins (X) and (X') can be produced by a known polyamide polymerization method, which is known as a production method of crystalline polyamide. As the production apparatus, a known polyamide production apparatus such as a batch reactor, a single-tank or multitank sequential reactor, a tubular sequential reactor, a kneading reaction extruder such as a uniaxial kneading extruder, a biaxial kneading extruder and the like can be used. As the polymerization method, a known method such as melt polymerization, solution polymerization, solid phase polymerization and the like may be used and polymerization can be performed by repeating normal pressure, reduced pressure and pressurization operations. These polymerization methods can be used alone or in an appropriate combination.

When polyamide resins (X) and (X') in the present invention are produced, the terminal-blocking agent exemplified above can be used, and the amount thereof to be used is determined based on the intrinsic viscosity and the blocking rate of the terminal group of the finally-obtained polyamide resin. While the specific amount of use varies depending on the reactivity or boiling point of the terminal-blocking agent to be used, reactor, reaction conditions and the like, it is generally within the range of 0.3 - 10 mol% relative to the total number of moles of dicarboxylic acid and diamine.

In the present invention, the polyamide resin composition (a) constituting layer A comprises polyamide resin (X) in a particular amount mentioned above and an impact resistance modifier, wherein the content of the impact resistance modifier is 70 - 10 mass%, preferably 50 - 15 mass%, more preferably 40 - 20 mass%, and further preferably 40 - 25 mass%. When the content of the impact resistance modifier exceeds 70 mass%, the alcohol gasoline permeation-preventing property of the whole multilayer structure is degraded and when it is less than 10 mass%, the impact resistance and elongation of the whole multilayer structure are degraded.

The polyamide resin composition (b) constituting layer B comprises polyamide resin (X') in a particular amount mentioned above and an impact resistance modifier, wherein the content of the impact resistance modifier is 50 - 5 mass%, preferably 30 - 7.5 mass%, and more preferably 20 - 10 mass%. When the content of the impact resistance modifier exceeds 50 mass%, the alcohol gasoline permeation-preventing property of the whole multilayer structure is degraded and when it is less than 5 mass%, the impact resistance and elongation of the whole multilayer structure are degraded.

The impact resistance modifier to be used for layer A and that to be used for layer B may be of the same kind or of different kinds.

In the multilayer structure of the present invention, moreover, the proportion Y (mass%) of the impact resistance modifier to be contained in the polyamide resin composition (a) and the proportion Y' (mass%) of the impact resistance modifier to be contained in the polyamide resin composition (b) need to satisfy the relationship Y≧Y'+5. In this way, layer A consisting of polyamide resin composition (a) and layer B consisting of polyamide resin composition (b) both show superior alcohol gasoline permeation-preventing property, and particularly layer A has a constitution superior in the impact resistance and layer B has a constitution more superior in the alcohol gasoline permeation-preventing property.

The impact resistance modifier to be used in the present invention is not particularly limited as long as it improves the impact resistance of polyamide resins (X) and (X') and, for example, polyolefin, polyolefin-based elastomer, polystyrene-based elastomer, acrylic-based elastomer, polyamide-based elastomer, polyester-based elastomer and the like can be mentioned. Of these, polyolefin, polyolefin-based elastomer, polystyrene-based elastomer and polyester-based elastomer are preferable.

Examples of the above-mentioned polyolefin include polybutadiene (PB), high-density polyethylene (HDPE), low-density polyethylene (LDPE), ultrahigh molecular weight polyethylene (UHMWPE), polypropylene (PP), polyisoprene, hydrogenated polyisoprene and the like.

Examples of the above-mentioned polyolefin-based elastomer include ethylene/propylene/diene rubber (EPDM), ethylene/butene copolymer (EBR), ethylene/propylene copolymer (EPR), ethylene/propylene/ethylidenenorbonene copolymer, ethylene-α-olefin copolymer and propylene-α-olefin copolymer (e.g., trade name TAFMER manufactured by Mitsui Petrochemical Industries, Ltd.) and the like.

Examples of the above-mentioned polystyrene-based elastomer include styrene/butadiene copolymer (SBR), hydrogenated styrene/butadiene copolymer (H-SBR), diblock or triblock copolymer comprising polystyrene block and hydrogenated polyisoprene block (e.g., trade name SEPTON manufactured by KURARAY CO., LTD.), diblock or triblock copolymer comprising polystyrene block and hydrogenated polybutadiene block (e.g., trade name KRATON G manufactured by Kraton Polymers LLC.) and the like.

Examples of the above-mentioned acrylic-based elastomer include polyacrylate, ethylenemethacrylic acid-based specialty elastomers (e.g., trade name Taflit T3000 manufactured by DU PONT-MITSUI POLYCHEMICALS Co., Ltd.), acrylic-based (reactive type) elastomers (e.g., trade name Paraloid EXL manufactured by KUREHA CHEMICAL INDUSTRY COMPANY, LIMITED), core-shell type elastomers comprising silicone rubber as the core and acrylic rubber or acrylic resin as the shell (e.g. grade name S2001 or RK120 manufactured by MITSUBISHI RAYON CO., LTD.) and the like.

Of these, polypropylene (PP), ethylene/butene copolymer (EBR), ethylene/propylene copolymer (EPR), ethylene-α-olefin copolymer, propylene-α-olefin copolymer, hydrogenated styrene/butadiene copolymer (H-SBR), or diblock or triblock copolymer comprising polystyrene block and hydrogenated polybutadiene block is preferably used, and polypropylene (PP), ethylene/butene copolymer (EBR) or ethylene/propylene copolymer (EPR) is used more preferably.

Moreover, the polyamide resin composition (a) and/or (b) to be used in the present invention may contain, where necessary, conductive filler, antioxidant, heat stabilizer, ultraviolet absorber, light stabilizer, lubricant, inorganic filler, antistatic agent, flame-retardant, crystallization promoter, plasticizer, colorant, lubricant agent and the like.

Furthermore, the polyamide resin composition (a) may contain a thermoplastic resin other than polyamide resin (X) and impact resistance modifier within the range that does not impair the object of the present invention. The polyamide resin composition (b) may contain a thermoplastic resin other than polyamide resin (X') and the impact resistance modifier within the range that does not impair the object of the present invention. Examples of such other thermoplastic resin include polyacetal (POM), poly(methyl methacrylate) (PMMA), various aliphatic polyamide and aromatic polyamide, polyester, poly(phenylene sulfide), polyether ether ketone, polysulfone, liquid crystal polymer, ethylene/tetrafluoroethylene copolymer (ETFE) and the like.

The multilayer structure of the present invention needs to consist of two layers of layer A consisting of polyamide resin composition (a) comprising 30 - 90 mass% of polyamide resin (X) and 70 - 10 mass% of an impact resistance modifier, and layer B consisting of polyamide resin composition (b) comprising 50 - 95 mass% of polyamide resin (X') and 50 - 5 mass% of an impact resistance modifier, or to comprise at least these two layers. The multilayer structure of the present invention may contain, besides two layers of layer A and layer B, one layer or two or more layers made of other thermoplastic resin, thereby to impart further function or to afford an economically advantageous multilayer structure. In addition, the multilayer structure of the present invention may have plural layers A or plural layers B.

Examples of the above-mentioned other thermoplastic resin include polyolefin-based resin such as high-density polyethylene (HDPE), low-density polyethylene (LDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methylacrylate copolymer (EMA), ethylene/methyl methacrylate copolymer (EMMA), ethylene/ethyl acrylate (EEA) and the like; the above-mentioned polyolefin-based resin containing a functional group such as carboxyl group such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid, endobicyclo[2.2.1]-5-heptene-2,3-dicarboxylic acid and the like and a metal salt thereof (Na, Zn, K, Ca, Mg and the like), acid anhydride group such as maleic anhydride, itaconic anhydride, citraconic anhydride, fumaric anhydride, endobicyclo[2.2.1]-5-heptene-2,3-dicarbonic acid anhydride and the like, epoxy group such as glycidyl acrylate, glycidyl methacrylate, glycidyl ethacrylate, glycidyl itaconate, glycidyl citraconate, etc., and the like; polyester-based resin such as poly(butylene terephthalate) (PBT), poly(ethylene terephthalate) (PET), poly(ethylene isophthalate) (PEI), poly(cyclohexylene terephthalate) (PCT), PET/PEI copolymer, polyarylate (PAR), poly(butylene naphthalate) (PBN), poly(ethylene naphthalate)(PEN), liquid crystal polyester (LCP) and the like; polyether-based resin such as polyacetal (POM), poly(phenylene oxide) (PPO) and the like; polysulfone-based resin such as polysulfone (PSF), polyethersulfone (PES) and the like; polythioether-based resin such as poly(phenylene sulfide) (PPS), polythioether sulfone (PTES) and the like; polyketone-based resin such as polyether ether ketone (PEEK), polyallyl ether ketone (PEAK) and the like; polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS), methacrylonitrile/styrene/butadiene copolymer (MBS) and the like; polymethacrylate-based resin such as poly(methyl methacrylate) (PMMA), poly(ethyl methacrylate) (PEMA) and the like; poly(vinyl acetate)-based resin such as poly(vinyl acetate) (PVAc) and the like; poly(vinyl chloride)-based resin such as poly(vinylidene chloride) (PVDC), poly(vinyl chloride) (PVC), vinyl chloride/vinylidene chloride copolymer, vinylidene chloride/methylacrylate copolymer and the like; cellulose-based resin such as cellulose acetate, cellulose butyrate and the like; fluorine-based resin such as poly(vinylidene fluoride) (PVDF), poly(vinyl fluoride) (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP,FEP), tetrafluoroethylene/hexafluoropropylene/vinylidene fluoride copolymer (TFE/HFP/VDF,THV), tetrafluoroethylene/fluoro(alkylvinylether) copolymer (PFA)
and the like; polycarbonate-based resin such as polycarbonate (PC) and the like; polyimide-based resin such as thermoplastic polyimide (PI), polyamideimide (PAI), polyetherimide (PEI) and the like; thermoplastic polyurethane-based resin; polyamide-based resin such as poly(ethylene adipamide) (polyamide 26), poly(tetramethylene adipamide) (polyamide 46), poly(hexamethylene adipamide) (polyamide 66), poly(hexamethylene azelaamide) (polyamide 69), poly(hexamethylene sebacamide) (polyamide 610), poly(hexamethylene undecamide) (polyamide 611), poly(hexamethylene dodecamide) (polyamide 612), poly(hexamethylene terephthalamide) (polyamide 6T), poly(hexamethylene isophthalamide) (polyamide 6I), poly(nonamethylene dodecamide) (polyamide 912), poly(decamethylene dodecamide) (polyamide 1012), poly(dodecamethylene dodecamide) (polyamide 1212), poly(methaxylylene adipamide) (polyamide MXD6), poly(bis(4-aminocyclohexyl)methane dodecamide) (polyamide PACM12), poly(bis(3-methyl-4-aminocyclohexyl)methane dodecamide) (polyamide dimethyl PACM12), poly(nonamethylene hexahydroterephthalamide) (polyamide 9T(H)), poly(decamethylene hexahydroterephthalamide) (polyamide 10T(H)), poly(undecamethylene hexahydroterephthalamide) (polyamide 11T(H)), poly(dodecamethylene hexahydroterephthalamide) (polyamide 12T(H)), a copolymer comprising several kinds of polyamide starting material monomers forming them and the like; polyurethane elastomer; polyester elastomer; polyamide elastomer and the like.

Of these, polyester-based resin, polythioether-based resin, fluorine-based resin or polyamide-based resin is o preferably used, and polyester-based resin, fluorine-based resin or polyamide-based resin is used more preferably.

Moreover, the multilayer structure of the present invention can be laminated with any substrate other than a layer made of the above-mentioned thermoplastic resin, for example, paper, a substrate made of a metal material, a non-oriented, uniaxially- or biaxially-oriented plastic film or sheet, a woven fabric, a nonwoven fabric, a metal cotton-like substrate, a woody substrate and the like. Examples of the metal material include metal such as aluminum, iron, copper, nickel, gold, silver, titanium, molybdenum, magnesium, manganese, lead, tin, chromium, beryllium, tungsten, cobalt and the like, a metal compound, alloys made of two or more kinds thereof such as alloy steel (e.g., stainless steel and the like), aluminum alloy, copper alloy (e.g., brass, bronze and the like), nickel alloy and the like, and the like.

In the multilayer structure of the present invention, the thickness of the layer A and layer B is not particularly limited, and can be adjusted according to the kind of polymer constituting each layer, the number of the layers of the whole, use and the like. The thickness of each layer is determined in consideration of the property of the multilayer structure such as alcohol gasoline permeation-preventing property, low temperature impact resistance, flexibility and the like. In general, the thickness of each of the layer A and layer B is preferably 3 - 90% of the thickness of the multilayer structure as a whole. In consideration of the alcohol gasoline permeation-preventing property, the thickness of each of the layer A and layer B is more preferably 5 - 80%, and further preferably 10 - 50%, relative to the thickness of the multilayer structure as a whole. The proportion of the total thickness of layer A and layer B relative to the thickness of the multilayer structure preferably exceeds 90%, more preferably 95%, from the aspects of the improvement of productivity of the multilayer structure, improvement of fuel permeation-preventing property of the multilayer structure and the like.

While any of layer A and layer B can be the outer layer of the multilayer structure of the present invention, layer A is preferably outer than layer B, in consideration of the alcohol gasoline permeation-preventing property and impact resistance.

In the multilayer structure of the present invention, moreover, both of layer A consisting of polyamide resin composition (a) comprising polyamide resin (X), and layer B consisting of polyamide resin composition (b) comprising polyamide resin (X') are preferably laminated directly from the aspect of the interlayer adhesiveness.

The layer number of multilayer structure of the present invention is not less than two layers as mentioned above, it is not more than 7 layers, preferably 2 layers - 6 layers, more preferably 2 layers - 5 layers judging from the mechanism of the production apparatus of the multilayer structure (e.g., laminate tube etc.).

Examples of the production method of the multilayer structure include a method comprising melt extrusion using an extruder corresponding to the number of the layer or the number of the materials, and simultaneous lamination within or outside the die (coextrusion method), and a method comprising once previously producing a single layer structure or a multilayer structure produced by the above-mentioned method, and successively integrating and laminating a resin on the outer side using an adhesive as necessary (coating method).

When the obtained multilayer structure has a complicated shape or a molded product is to be produced by a heat bending processing after molding, it is possible to obtain the object molded product by a heat treatment, after forming the above-mentioned multilayer structure, for 0.01 - 10 hr at a temperature lower than the lowest melting point of the melting points of the resins constituting the aforementioned structure, thereby to eliminate residual distortion of the molded product.

The multilayer structure may have a wavy region. The wavy region means a region formed in a wave shape, bellows-shape, accordion shape, corrugated shape and the like. The multilayer structure may have a wavy region over the entire length, or may have a partial wavy region in an appropriate region in the entire length. In the case of, for example, a laminate tube, the wavy region can be easily formed by molding a straight tube, and subsequent mold forming to give a predetermined wavy shape and the like. With such a wavy region, the multilayer structure has impact absorbability and can be attached easily. Moreover, for example, it is possible to add a necessary part such as a connector and the like, and apply a bending processing to afford an L-shape, U-shape and the like.

The thus-formed multilayer structure can have, on the entirety or a part of the outer circumference, a protection member (protector) made of epichlorohydrin rubber (ECO), acrylonitrile/butadiene rubber (NBR), a mixture of NBR and poly(vinyl chloride), chlorosulfonated polyethylene rubber, chlorinated polyethylene rubber, acrylic rubber (ACM), chloroprene rubber (CR), ethylene/propylene rubber (EPR), ethylene/propylene/diene rubber (EPDM), a mixed rubber of NBR and EPDM, thermoplastic elastomers such as vinyl chloride-based, olefin-based, ester-based, amide-based and the like, or the like, in consideration of stone bouncing, abrasion with other parts and flame resistance. The protection member may be non-porous or may be made porous such as sponge and the like by a known method. By making porous, a lightweight protection member superior in the heat insulating property can be formed. In addition, the material cost can also be reduced. Alternatively, glass fiber and the like may be added to improve the strength thereof. While the shape of the protection member is not particularly limited, when the multilayer structure is, for example, a laminate tube, it is generally a tubular member or a block member having a concave for receiving the laminate tube. In the case of a tubular member, it can be set by inserting a laminate tube into a tubular member produced in advance, or a tubular member is coated and extruded on a laminate tube to bring them in close contact with each other. To adhere them, an adhesive is applied to the inside of the protection member or the aforementioned concave surface as necessary, and inserting or fitting a laminate tube thereto and bringing them in close contact with each other, whereby a structure integrating the laminate tube and the protection member can be formed. In addition, the structure can be reinforced with a metal and the like.

When the multilayer structure has a tubular shape, the outer diameter thereof is designed, but not limited to, such that the thickness does not increase the permeability of gasoline, can maintain the destruction pressure of general tube, and can also maintain the flexibility affording easy tube assembly operation and good vibration resistance during use, in consideration of the flow rate such as of the fuel (e.g., gasoline) and the like. Preferably, the outer diameter is 4 - 30 mm, the inner diameter is 3 - 25 mm, and the thickness is 0.5 - 5 mm.

Examples of the application of the multilayer structure of the present invention include machine components such as automobile parts, internal combustion purposes, housings for electric tool and the like, as well as various uses such as technical material, industrial material, electric or electronic parts, medical, food, household or office equipment, construction material-related parts, furniture parts, household goods and the like.

Also, since the multilayer structure of the present invention is superior in the alcohol gasoline permeation-preventing property, it is preferable for chemical liquid carrier piping. Examples of the chemical liquid include gasoline, kerosene, diesel fuel, methanol, ethanol, propanol, butanol, alcohol-containing gasoline, methyl-t-butyl ether, oxygen-containing gasoline, amine-containing gasoline, sour gasoline, castor oil-based brake fluid, glycol ether-based brake fluid, boric acid ester-based brake fluid, brake fluid for very cold land, silicone oil-based brake fluid, mineral oil-based brake fluid, power steering oil, window washer liquid, engine cooling liquid, pharmaceutical agent, ink, paint and the like. The multilayer structure of the present invention is preferable as a tube for transporting the above-mentioned chemical liquid and specifically, a fuel transport tube such as feed tube, return tube, evaporation tube, fuel filler tube, ORVR tube, reserve tube, vent tube and the like, oil tube, brake tube, window washer liquid tube, radiator tube, cooler tube for cooling water, cooling medium etc., tube for air conditioner cooling medium, floor heating tube, tube for fire extinguisher and fire extinguishing facility, tube for medical cooling equipment, ink or paint spray tube, and other chemical liquid tube can be mentioned. The multilayer structure of the present invention is preferable, particularly, as a fuel transport tube.

### Examples

While the present invention is explained in more detail by referring to the following Examples and Comparative Examples, which are not to be construed as limitative.

The analysis and measurement of the physical properties in the Examples and Comparative Examples were performed as follows.

### [Intrinsic viscosity]

Polyamide was dissolved in concentrated sulfuric acid to prepare sample solutions having concentrations of 0.05 g/dl, 0.1 g/dl, 0.2 g/dl and 0.4 g/dl, and intrinsic viscosity ηᵢₙₕ at 30°C was measured. The value was extrapolated to 0 and the obtained value was taken as the intrinsic viscosity [η].

### [Physical property evaluation]

### (Low temperature impact resistance)

The property was evaluated by the method described in SAE J2260.

### (Alcohol gasoline permeation-preventing property)

One end of a tube cut into 200 mm was tightly sealed, a mixture (alcohol/gasoline) of Fuel C (isooctane/toluene=50/50 volume ratio) and ethanol at 90/10 volume ratio was placed therein, and the other end was also tightly sealed. Thereafter, the entire weight was measured, the test tube was placed in an oven at 60°C, and changes in the weight were measured at daily intervals. The change in the weight per day was divided by the inner layer surface area of the tube to give an alcohol gasoline permeation coefficient (g/m²·day) by calculation.

### (Interlayer adhesiveness)

A tube cut into 200 mm was further cut in half in the longitudinal direction to give a test piece. Using a TENSILON universal testing machine, a 180° delamination test was performed at a tensile rate of 50 mm/min. The delamination strength was read from the maximum point of the S-S curve and the interlayer adhesiveness was evaluated.

### [Materials used in Examples and Comparative Examples]

### (a) Polyamide 9T

### (a-1) Production of polyamide 9T

Terephthalic acid (32960 g, 198.4 mol), 1,9-nonanediamine (26909 g, 170 mol), 2-methyl-1,8-octanediamine (4748.7 g, 30 mol), benzoic acid (390.8 g, 3.2 mol), sodium hypophosphite monohydrate (60 g, 0.1 mass% relative to starting materials) and distilled water (40 L) were placed in an autoclave, which was subjected to nitrogen substitution.

The above-mentioned mixture was stirred at 100°C for 30 min and the inside temperature was raised to 210°C over 2 hr. At this time, the autoclave was pressurized to 2.2 MPa. The reaction was continued for 1 hr as it was, the temperature was raised to 230°C, maintained at 230°C for 2 hr thereafter, and the reaction was performed while maintaining the pressure at 2.2 MPa by gradually extracting the water vapor. Then, the pressure was lowered to 1.0 MPa over 30 min and the reaction was continued for further 1 hr to give a prepolymer. This was dried at 100°C for 12 hr under reduced pressure and pulverized to 2 mm or less. This was subjected to solid phase polymerization at 230°C, 0.013 kPa for 10 hr to give polyamide 9T having a melting point of 300°C and an intrinsic viscosity of 1.92 dl/g (hereinafter this polyamide is referred to as (a-1)).

### (a-2) Production of polyamide 9T

In the same manner as in the method of (a-1) Production of polyamide 9T except that 1,9-nonanediamine (26909 g, 170 mol) was changed to (15829 g, 100 mol) and 2-methyl-1,8-octanediamine (4748.7 g, 30 mol) was changed to (15829 g, 100 mol), a polyamide 9T having a melting point of 275°C and an intrinsic viscosity of 1.85 dl/g was obtained (hereinafter this polyamide is referred to as (a-2)).

### (b) Polyamide 9N

### (b-1) Production of polyamide 9N

2,6-Naphthalenedicarboxylic acid (42892 g, 198.4 mol), 1,9-nonanediamine (26909 g, 170 mol), 2-methyl-1,8-octanediamine (4748.7 g, 30 mol), benzoic acid (390.8 g, 3.2 mol), sodium hypophosphite monohydrate (60 g, 0.1 mass% relative to starting materials) and distilled water (40 L) were placed in an autoclave, which was subjected to nitrogen substitution.

The above-mentioned mixture was stirred at 100°C for 30 min and the inside temperature was raised to 210°C over 2 hr. At this time, the autoclave was pressurized to 2.2 MPa. The reaction was continued for 1 hr as it was, the temperature was raised to 240°C, maintained at 230°C for 2 hr thereafter, and the reaction was performed while maintaining the pressure at 2.2 MPa by gradually extracting the water vapor. Then, the pressure was lowered to 1.0 MPa over 30 min and the reaction was continued for further 1 hr to give a prepolymer. This was dried at 100°C for 12 hr under reduced pressure and pulverized to 2 mm or less. This was subjected to solid phase polymerization at 240°C, 0.013 kPa for 10 hr to give polyamide 9N having a melting point of 302°C and an intrinsic viscosity of 1.90 dl/g (hereinafter this polyamide is referred to as (b-1)).

### (b-2) Production of polyamide 9N

In the same manner as in the method of (b-1) Production of polyamide 9N except that 1,9-nonanediamine (26909 g, 170 mol) was changed to (15829 g, 100 mol) and 2-methyl-1,8-octanediamine (4748.7 g, 30 mol) was changed to (15829 g, 100 mol), a polyamide 9N wherein melting point is 275°C and intrinsic viscosity is 1.85 dl/g was obtained (hereinafter this polyamide is referred to as (b-2)).

### (A-1) Production of polyamide 9T resin composition

Polyamide 9T (a-1) was premixed with JSR T7761P (manufactured by JSR Corporation, ethylene/propylene copolymer) as an impact resistance modifier, this was supplied to a twin screw extruder (BT-30, manufactured by PLABOR Co., Ltd.), melted and kneaded and extruded under the condition of cylinder temperature 320°C, cooled and cut to give pellet of a polyamide 9T resin composition comprising a polyamide 9T resin (90 parts by mass) and an impact resistance modifier (10 parts by mass) (hereinafter this polyamide 9T resin composition is abbreviated as A-1).

### (A-2) Production of polyamide 9T resin composition

In the same manner as in the above-mentioned production method (A-1), pellets of a polyamide 9T resin composition comprising a polyamide 9T resin (80 parts by mass) and an impact resistance modifier (20 parts by mass) were obtained (hereinafter this polyamide 9T resin composition is abbreviated as A-2).

### (A-3) Production of polyamide 9T resin composition

In the same manner as in the above-mentioned production method (A-1) except that the polyamide 9T was changed from (a-1) to (a-2), pellets of a polyamide 9T resin composition comprising a polyamide 9T resin (70 parts by mass) and an impact resistance modifier (30 parts by mass) were obtained (hereinafter this polyamide 9T resin composition is abbreviated as A-3).

### (A-4) Production of polyamide 9T resin composition

In the same manner as in the above-mentioned production method (A-3), pellets of a polyamide 9T resin composition comprising a polyamide 9T resin (60 parts by mass) and an impact resistance modifier (40 parts by mass) were obtained (hereinafter this polyamide 9T resin composition is abbreviated as A-4).

### (B-1) Production of polyamide 9N resin composition

Polyamide 9N (b-1) was premixed with JSR T7761P (manufactured by JSR Corporation, ethylene/propylene copolymer) as an impact resistance modifier, this was supplied to a twin screw extruder (BT-30, manufactured by PLABOR Co., Ltd.), melted and kneaded and extruded under the condition of cylinder temperature 320°C, cooled and cut to give pellet of a polyamide 9T resin composition comprising a polyamide 9N resin (80 parts by mass) and an impact resistance modifier (20 parts by mass) (hereinafter this polyamide 9N resin composition is abbreviated as B-1).

### (B-2) Production of polyamide 9N resin composition

In the same manner as in the above-mentioned production method (B-1) except that the polyamide 9N was changed from (b-1) to (b-2), pellets of a polyamide 9T resin composition comprising a polyamide 9N resin (80 parts by mass) and an impact resistance modifier (20 parts by mass) were obtained (hereinafter this polyamide 9N resin composition is abbreviated as B-2).

### (C) Polyolefin-based TPE (thermoplastic elastomer) manufactured by AES Japan Ltd., santoprene 103-50

### Example 1

Using the above-mentioned polyamide 9T resin composition (A-3) and a polyamide 9T resin composition (A-1), (A-3) and (A-1) were independently melted at an extrusion temperature 300°C and extrusion temperature 320°C, respectively, on a tube forming machine manufactured by PLABOR Co., Ltd. and the discharged molten resins were combined by an adapter to be formed into a laminate tube. Subsequently, the tube was cooled by a sizing die that controls the size and picked up to give a laminate tube having a layer constitution of thickness (I)/(III)=0.80/0.20 mm, wherein layer (I) (the outermost layer) is made of polyamide 9T resin composition (A-3) and layer (III) (innermost layer) is made of polyamide 9T resin composition (A-1), an inner diameter (6 mm), and an outer diameter (8 mm). The measurement results of the physical properties of the laminate tube are shown in Table 1.

### Example 2

In the same manner as in Example 1 except that (A-1) was changed to (A-2), a laminate tube having the layer constitution shown in Table 1 was obtained. The measurement results of the physical properties of the laminate tube are shown in Table 1.

### Example 3

In the same manner as in Example 1 except that (A-3) was changed to (A-4), a laminate tube having the layer constitution shown in Table 1 was obtained. The measurement results of the physical properties of the laminate tube are shown in Table 1.

### Example 4

In the same manner as in Example 3 except that (A-1) was changed to (A-2), a laminate tube having the layer constitution shown in Table 1 was obtained. The measurement results of the physical properties of the laminate tube are shown in Table 1.

### Example 5

In the same manner as in Example 3 except that (A-1) was changed to (B-1), a laminate tube having the layer constitution shown in Table 1 was obtained. The measurement results of the physical properties of the laminate tube are shown in Table 1.

### Example 6

In the same manner as in Example 3 except that (A-1) was changed to (B-2) and (B-2) was melted at an extrusion temperature of 300°C, a laminate tube having the layer constitution shown in Table 1 was obtained. The measurement results of the physical properties of the laminate tube are shown in Table 1.

### Example 7

Using the above-mentioned polyolefin-based TPE (C), polyamide 9T resin composition (A-3) and a polyamide 9T resin composition (A-1), (C), (A-3) and (A-1) were independently melted at extrusion temperatures of 230°C, 300°C and 320°C, respectively, on a tube forming machine manufactured by PLABOR Co., Ltd. and the discharged molten resins were combined by an adapter to be formed into a laminate tube. Subsequently, the tube was cooled by a sizing die that controls the size and picked up to give a laminate tube having a layer constitution of thickness (I)/(II)/(III)=0.30/0.30/0.40 mm, wherein layer (I) (the outermost layer) is made of polyolefin-based TPE (c), layer (II) (intermediate layer) is made of polyamide 9T resin composition (A-3), and layer (III) (innermost layer) is made of polyamide 9T resin composition (A-1), an inner diameter (6 mm), and an outer diameter (8 mm). The measurement results of the physical properties of the laminate tube are shown in Table 1.

### Example 8

In the same manner as in Example 7 except that (A-1) was changed to (B-1) and (B-1) was melted at an extrusion temperature of 300°C, a laminate tube having the layer constitution shown in Table 1 was obtained. The measurement results of the physical properties of the laminate tube are shown in Table 1.

### Comparative Example 1

In the same manner as in Example 1 except that (A-3) was changed to (C) and (C) was melted at an extrusion temperature of 250°C, a laminate tube having the layer constitution shown in Table 1 was obtained. The measurement results of the physical properties of the laminate tube are shown in Table 1.

### Comparative Example 2

In the same manner as in Example 5 except that (A-4) was changed to (C) and (C) was melted at an extrusion temperature of 250°C, a laminate tube having the layer constitution shown in Table 1 was obtained. The measurement results of the physical properties of the laminate tube are shown in Table 1.

### Comparative Example 3

Using the above-mentioned polyamide 9T resin composition (A-1), (A-1) was melted at an extrusion temperature of 320°C, on a tube forming machine manufactured by PLABOR Co., Ltd. and the discharged molten resin was formed into a tube. Subsequently, the tube was cooled by a sizing die that controls the size and picked up to give a single layer tube made of a polyamide 9T resin composition (A-1) and having an inner diameter (6 mm) and an outer diameter (8 mm). The measurement results of the physical properties of the single layer tube are shown in Table 1.

### Comparative Example 4

In the same manner as in Comparative Example 3 except that (A-1) was changed to (A-2), a single layer tube having the layer constitution shown in Table 1 was obtained. The measurement results of the physical properties of the single layer tube are shown in Table 1.

### Comparative Example 5

In the same manner as in Comparative Example 3 except that (A-1) was changed to (A-3) and (A-3) was melted at an extrusion temperature of 300°C, a single layer tube having the layer constitution shown in Table 1 was obtained. The measurement results of the physical properties of the single layer tube are shown in Table 1.

### Comparative Example 6

In-the same manner as in Comparative Example 3 except that (A-1) was changed to (A-4) and (A-4) was melted at an extrusion temperature of 300°C, a single layer tube having the layer constitution shown in Table 1 was obtained. The measurement results of the physical properties of the single layer tube are shown in Table 1.

### Comparative Example 7

In the same manner as in Comparative Example 3 except that (A-1) was changed to (B-1) and (B-1) was melted at an extrusion temperature of 300°C, a single layer tube having the layer constitution shown in Table 1 was obtained. The measurement results of the physical properties of the single layer tube are shown in Table 1.

### Comparative Example 8

In the same manner as in Comparative Example 3 except that (A-1) was changed to (B-2) and (B-2) was melted at an extrusion temperature of 300°C, a single layer tube having the layer constitution shown in Table 1 was obtained. The measurement results of the physical properties of the single layer tube are shown in Table 1.

### Comparative Example 9

In the same manner as in Comparative Example 3 except that (A-1) was changed to (C) and (C) was melted at an extrusion temperature of 230°C, a single layer tube having the layer constitution shown in Table 1 was obtained. The measurement results of the physical properties of the single layer tube are shown in Table 1.

**Table 1**

| | Outermost layer^{*1} layer (I) | Intermediate layer^{*1} layer (II) | Innermost layer^{*1} layer (III) | Alcohol gasoline permeation coefficient (g/m²·day) | Interlayer adhesiveness (N/cm) | Low temperature impact resistance (numbers of broken tube/tested tube) |
|---|---|---|---|---|---|---|
| Ex. 1 | A-3(0.8) | - | A-1(0.2) | 0.2 | No delamination | 0/10 |
| Ex. 2 | A-3(0.8) | - | A-2(0.2) | 0.6 | No delamination | 0/10 |
| Ex. 3 | A-4(0.8) | - | A-1(0.2) | 0.5 | 57 | 0/10 |
| Ex. 4 | A-4(0.8) | - | A-2(0.2) | 0.8 | 59 | 0/10 |
| Ex. 5 | A-4(0.8) | - | B-1(0.2) | 0.05 | 56 | 0/10 |
| Ex. 6 | A-4(0.8) | - | B-2(0.2) | 0.1 | 59 | 0/10 |
| Ex. 7 | C (0.3) | A-3(0.3) | A-1(0.4) | 0.8 | 45 | 0/10 |
| Ex. 8 | C (0.3) | A-3(0.3) | B-1(0.4) | 0.5 | 47 | 0/10 |
| Comp. Ex. 1 | C (0.8) | - | A-1(0.2) | 2.3 | 36 | 0/10 |
| Comp. Ex. 2 | C (0.8) | - | B-1(0.2) | 1.7 | 34 | 0/10 |
| Comp. Ex. 3 | A-1(1.0) | - | - | 0.1 | - | 8/10 |
| Comp. Ex. 4 | A-2(1.0) | - | - | 0.3 | - | 5/10 |
| Comp. Ex. 5 | A-3(1.0) | - | - | 3.1 | - | 0/10 |
| Comp. Ex. 6 | A-4(1.0) | - | - | 4.6 | - | 0/10 |
| Comp. Ex. 7 | B-1(1.0) | - | - | 0.02 | - | 10/10 |
| Comp. Ex. 8 | B-2(1.0) | - | - | 0.07 | - | 8/10 |
| Comp. Ex. 9 | C (1.0) | - | - | 198 | - | 0/10 |

| | | | | | | |
|---|---|---|---|---|---|---|
| *1:() shows layer thickness (mm) | | | | | | |

From Table 1, it is clear that the laminate tubes of Examples 1 - 8 showed a remarkably small alcohol gasoline permeation coefficient (that is, superior in alcohol gasoline permeation-preventing property), showed remarkably high delamination strength or no interlayer delamination (that is, superior in interlayer adhesiveness), and were superior in low temperature impact resistance.

In contrast, the laminate tubes of Comparative Examples 1 and 2 using a layer made of polyolefin-based TPE as the outermost layer showed remarkably high alcohol gasoline permeation coefficient (that is, inferior in alcohol gasoline permeation-preventing property), and remarkably small delamination strength (that is, inferior in interlayer adhesiveness). The single layer tubes of Comparative Examples 3 - 9 showed remarkably high alcohol gasoline permeation coefficient (that is, inferior in the alcohol gasoline permeation-preventing property; Comparative Examples 5, 6 and 9), or were inferior in the low temperature impact resistance (Comparative Examples 3, 4, 7 and 8).

### Industrial Applicability

The multilayer structure of the present invention is superior in the alcohol gasoline permeation-preventing property, heat resistance, chemical resistance, low temperature impact resistance and interlayer adhesiveness. Accordingly, the multilayer structure of the present invention is useful, for example, as film, tube (hose), bottle, tank for automobile parts, technical material, industrial material, electric or electronic parts, mechanical parts, office equipment parts, household goods, container, particularly, as a fuel transport tube such as an automobile fuel transport tube and the like.

This application is based on application No. 2005-103298 filed in Japan.

## Claims

1. A multilayer structure comprising at least two layers of layer A consisting of a polyamide resin composition (a) comprising 30 - 90 mass% of a polyamide resin (X) comprising a dicarboxylic acid unit comprising 50 - 100 mol% of a terephthalic acid unit and/or a naphthalene dicarboxylic acid unit, and a diamine unit comprising 60 - 100 mol% of an aliphatic diamine unit having 9 - 13 carbon atoms, and 70 - 10 mass% of an impact resistance modifier, and layer B consisting of a polyamide resin composition (b) comprising 50 - 95 mass% of a polyamide resin (X') comprising a dicarboxylic acid unit comprising 50 - 100 mol% of a terephthalic acid unit and/or a naphthalene dicarboxylic acid unit, and a diamine unit comprising 60 - 100 mol% of an aliphatic diamine unit having 9
- 13 carbon atoms, and 50 - 5 mass% of an impact resistance modifier, which satisfies Y≧Y'+5 wherein Y shows a content ratio (mass%) of the impact resistance modifier in layer A and Y' shows a content ratio (mass%) of the impact resistance modifier in layer B.

2. The multilayer structure of claim 1, wherein the aliphatic diamine unit(s) having 9 - 13 carbon atoms constituting the polyamide resin (X) is(are) a 1,9-nonanediamine unit and/or a 2-methyl-1,8-octanediamine unit.

3. The multilayer structure of claim 1 or 2, wherein the aliphatic diamine unit(s) having 9 - 13 carbon atoms constituting the polyamide resin (X') is(are) a 1,9-nonanediamine unit and/or a 2-methyl-1,8-octanediamine unit.

4. The multilayer structure of any one of claims 1 - 3, wherein the proportion of the total thickness of layer A and layer B relative to the thickness of the multilayer structure exceeds 90%.

5. The multilayer structure of any one of claims 1 - 4, wherein the layer A is directly laminated on the layer B.

6. The multilayer structure of any one of claims 1 - 5, which is a fuel transport tube.

## Patentansprüche

1. Mehrschichtstruktur, umfassend mindestens zwei Schichten von Schicht A, bestehend aus einer Polyamidharzzusammensetzung (a), umfassend 30 bis 90 Massenprozent eines Polyamidharzes (X), umfassend eine Dicarbonsäureeinheit, umfassend 50 bis 100 Mol-% einer Terephthalsäureeinheit und/oder einer Naphthalindicarbonsäureeinheit, und eine Diamineinheit, umfassend 60 bis 100 Mol-% einer aliphatischen Diamineinheit mit 9 bis 13 Kohlenstoffatomen, und 70 bis 10 Massenprozent eines Schlagfestigkeitsmodifizierers, und Schicht B, bestehend aus einer Polyamidharzzusammensetzung (b), umfassend 50 bis 95 Massenprozent eines Polyamidharzes (X'), umfassend eine Dicarbonsäureeinheit, umfassend 50 bis 100 Mol-% einer Terephthalsäureeinheit und/oder einer Naphthalindicarbonsäureeinheit, und eine Diamineinheit, umfassend 60 bis 100 Mol-% einer aliphatischen Diamineinheit mit 9 bis 13 Kohlenstoffatomen, und 50 bis 5 Massenprozent eines Schlagfestigkeitsmodifizierers, welche dem Ausdruck Y ≥ Y' + 5 genügt, wobei Y ein Gehaltsverhältnis (Massenprozent) des Schlagfestigkeitsmodifizierers in Schicht A zeigt und Y' ein Gehaltsverhältnis (Massenprozent) des Schlagfestigkeitsmodifizierers in Schicht B zeigt.

2. Mehrschichtstruktur nach Anspruch 1, wobei die aliphatische(n) Diamineinheit(en) mit 9 bis 13 Kohlenstoffatomen, welche das Polyamidharz (X) aufbaut/aufbauen, eine 1,9-Nonandiamineinheit und/oder eine 2-Methyl-1,8-octandiamineinheit ist/sind.

3. Mehrschichtstruktur nach Anspruch 1 oder 2, wobei die aliphatische(n) Diamineinheit(en) mit 9 bis 13 Kohlenstoffatomen, welche das Polyamidharz (X') aufbaut/aufbauen, eine 1,9-Nonandiamineinheit und/oder eine 2-Methyl-1,8-octandiamineinheit ist/sind.

4. Mehrschichtstruktur nach einem der Ansprüche 1 bis 3, wobei das Verhältnis der Gesamtdicke von Schicht A und Schicht B bezogen auf die Dicke der Mehrschichtstruktur 90% übersteigt.

5. Mehrschichtstruktur nach einem der Ansprüche 1 bis 4, wobei die Schicht A direkt auf die Schicht B laminiert ist.

6. Mehrschichtstruktur nach einem der Ansprüche 1 bis 5, welche ein Brennstofftransportrohr ist.

## Revendications

1. Structure multicouche comprenant au moins deux couches de couche A constituée d'une composition de résine de poly(amide) (a) comprenant 30 à 90 % en masse d'une résine de poly(amide) (X) comprenant un motif acide dicarboxylique comprenant 50 à 100 % en mole d'un motif acide téréphtalique et/ou un motif acide naphtalène dicarboxylique, et un motif diamine comprenant 60 à 100 % en mole d'un motif diamine aliphatique comportant 9 à 13 atomes de carbone, et 70 à 10 % en masse d'un modificateur de la résistance aux chocs, et une couche B constituée d'une composition de résine de poly(amide) (b) comprenant 50 à 95 % en masse d'une résine de poly(amide) (X') comprenant un motif acide dicarboxylique comprenant 50 à 100 % en mole d'un motif acide téréphtalique et/ou d'un motif acide naphtalène dicarboxylique, et un motif diamine comprenant 60 à 100 % en mole d'un motif diamine aliphatique comportant 9 à 13 atomes de carbone, et 50 à 5 % en masse d'un modificateur de la résistance aux chocs, qui satisfait Y ≥ Y' + 5 où Y représente un rapport de teneur (% en masse) du modificateur de la résistance aux chocs dans la couche A et Y' représente un rapport de teneur (% en masse) de la modification de la résistance aux chocs dans la couche B.

2. Structure multicouche selon la revendication 1, dans laquelle le ou les motifs diamine aliphatique comportant 9 à 13 atomes de carbone constituant la résine de poly(amide) (X) est (sont) un motif 1,9-nonanediamine et/ou un motif 2-méthyl-1,8-octanediamine.

3. Structure multicouche selon la revendication 1 ou 2, dans laquelle le ou les motifs diamine aliphatique comportant 9 à 13 atomes de carbone constituant la résine de poly(amide) (X') est (sont) un motif 1,9-nonanediamine et/ou un motif 2-méthyl-1,8-octanediamine.

4. Structure multicouche selon l'une quelconque des revendications 1 à 3, dans laquelle la proportion entre l'épaisseur totale de la couche A et de la couche B par rapport à l'épaisseur de la structure multicouche dépasse 90 %.

5. Structure multicouche selon l'une quelconque des revendications 1 à 4, dans laquelle la couche A est directement stratifiée sur la couche B.

6. Structure multicouche selon l'une quelconque des revendications 1 à 5, qui est un tube de transport de carburant ou combustible.
